(19) Europäisches Patentamt / European Patent Office / Office européen des brevets

(11) **EP 4 711 335 A1**

(12) **EUROPEAN PATENT APPLICATION**
published in accordance with Art. 153(4) EPC

(43) Date of publication:
**18.03.2026 Bulletin 2026/12**

(21) Application number: 24807095.5

(22) Date of filing: **08.05.2024**

(51) International Patent Classification (IPC):
*C01B 39/44* (2006.01)    *B01D 53/94* (2006.01)
*B01J 29/68* (2006.01)    *B01J 29/88* (2006.01)

(52) Cooperative Patent Classification (CPC):
**B01D 53/94; B01J 29/68; B01J 29/88; B01J 37/10; C01B 39/44; C01B 39/46**

(86) International application number:
**PCT/JP2024/017079**

(87) International publication number:
**WO 2024/237142 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.05.2023 JP 2023079261**

(71) Applicant: **Tosoh Corporation
Yamaguchi 746-8501 (JP)**

(72) Inventors:
• **CHEN, Ning**
**Shunan-shi Yamaguchi 746-8501 (JP)**
• **ITO, Masato**
**Shunan-shi Yamaguchi 746-8501 (JP)**
• **NAKAO, Keita**
**Shunan-shi Yamaguchi 746-8501 (JP)**

(74) Representative: **TBK
Bavariaring 4-6
80336 München (DE)**

(54) **IRON-CONTAINING FER-TYPE ZEOLITE AND METHOD FOR PRODUCING SAME**

(57)    Provided is at least one of an FER-type zeolite that generates less $N_2O$ during nitrogen oxide reduction compared to a typical iron-containing FER-type zeolite and that can be industrially applied, a production method therefor, and a nitrogen oxide-reducing catalyst including the same.

## FIG. 1

**Description**

TECHNICAL FIELD

The present disclosure relates to an iron-containing fer-type zeolite and a production method therefor.

BACKGROUND ART

An FER-type zeolite containing iron as a transition metal element is being studied as a prospective transition metal-containing zeolite that can be used as a nitrogen oxide-reducing catalyst with which generation of by-product $N_2O$ is suppressed (for example, Patent Documents 1 to 4).

For example, Patent Documents 1 to 3 have reported that an FER-type zeolite can be loaded with iron by a post-treatment that involves mixing the FER-type zeolite with an aqueous solution containing an iron salt such as iron nitrate. In addition, Patent Document 4 has reported that an iron-containing FER-type zeolite is directly obtained by crystallizing an iron-containing raw material.

PRIOR ART DOCUMENTS

PATENT DOCUMENTS

Patent Document 1: Japanese Unexamined Patent Application Publication No. 2017-510437
Patent Document 2: Japanese Unexamined Patent Application Publication No. 2017-512630
Patent Document 3: Japanese Unexamined Patent Application Publication No. 2007-537858
Patent Document 4: Chinese Unexamined Patent Application Publication No. 114345402

NON-PATENT DOCUMENTS

Non-Patent Document 1: Catalysis Communications, 2017, 89, 133-147
Non-Patent Document 2: Journal of Catalysis, 2009, 261, 27-34

DISCLOSURE OF INVENTION

TECHNICAL PROBLEM

Compared to the FER-type zeolites in which iron is loaded by a post-treatment disclosed in Patent Documents 1 to 3, the iron-containing FER-type zeolite obtained by direct crystallization disclosed in Patent Document 4 has a high nitrogen oxide-reducing property. However, crystallization disclosed in Patent Document 4 uses expensive hexamethylimine as an essential raw material, and thus the obtained FER-type zeolite is expensive and industrial application thereof is challenging.

An object of the present disclosure is to provide at least one of an FER-type zeolite that generates less $N_2O$ during nitrogen oxide reduction compared to a typical iron-containing FER-type zeolite and that can be industrially applied, a production method therefor and a nitrogen oxide-reducing catalyst containing the same.

SOLUTION TO PROBLEM

In the present disclosure, improvements on the nitrogen oxide-reducing property of iron-containing FER-type zeolites have been examined. As a result, it has been found that an iron-containing FER-type zeolite can be directly crystallized by performing crystallization on controlled raw materials under controlled conditions without necessitating an expensive organic structure-directing agent such as hexamethylimine. Furthermore, it has been found that iron in such an iron-containing FER-type zeolite assumes a state different from that of iron in a typical iron-containing FER-type zeolite and is highly dispersed, and that, compared to a typical iron-containing FER-type zeolite, generation of $N_2O$ during nitrogen oxide reduction in a low temperature range can be further suppressed.

In other words, the present invention is as recited in the claims, and the gist of the present disclosure is as follows.

[1] An FER-type zeolite comprising iron, in which, relative to peaks at a wavelength of 190 nm or more and 600 nm or less in an UV-VIS spectrum, an area fraction of peaks in a spectrum at a wavelength of 300 nm or more and 600 nm or less is 20% or less.

[2] The FER-type zeolite described in [1], in which, relative to the peaks at a wavelength of 190 nm or more and 600 nm or less in the UV-VIS spectrum, an area fraction of peaks in a spectrum at a wavelength of more than 400 nm and 600 nm or less is 20% or less.

[3] The FER-type zeolite described in [1] or [2], in which, relative to the peaks at a wavelength of 190 nm or more and 600 nm or less in the UV-VIS spectrum, an area fraction of peaks in a spectrum at a wavelength of 190 nm or more and less than 300 nm is 80% or more.

[4] The FER-type zeolite described in any one of [1] to[3], in which an iron content is 5 mass% or less.

[5] The FER-type zeolite described in any one of [1] to [4], in which a molar ratio of silica to alumina is 5 or more and 50 or less.

[6] The FER-type zeolite described in any one of [1] to [5], comprising at least one element selected from the group consisting of copper (Cu), manganese (Mn), zirconium (Zr), yttrium (Y), cerium (Ce), lanthanum (La) and calcium (Ca).

[7] A method for producing the FER-type zeolite described in any one of [1] to [6], the method comprising a step of crystallizing a composition containing a silica alumina source, an iron source, an alkali source, water and a seed crystal, in which a molar ratio of iron to silicon as $SiO_2$ is less than 0.1.

[8] The method described in [7], in which the alkali source includes at least a sodium source or a potassium source.

[9] The method for producing the FER-type zeolite described in [7] or [8], in which the composition has molar compositions below wherein M in the molar compositions below represents an alkali metal:

$SiO_2/Al_2O_3$ = 5 or more and 50 or less
$Fe/SiO_2$ = more than 0 and less than 0.1
$M/SiO_2$ = 0.05 or more and less than 0.40
K/M = 0 or more and 0.9 or less
$H_2O/SiO_2$ = 5 or more and 50 or less.

[10] The method described in any one of [7] to [9], in which the seed crystal is at least one selected from the group consisting of a CHA-type zeolite, an AEI-type zeolite, an MOR-type zeolite, an FER-type zeolite and an AFX-type zeolite.

[11] The method described in any one of [7] to [10], in which a content of the seed crystal in the raw material composition is more than 0 mass% and 10 mass% or less.

[12] The method described in any one of [7] to [11], in which no organic structure-directing agent source is included.

[13] The method described in any one of [7] to [12], wherein at least one organic structure-directing agent source selected from the group consisting of pyridine, pyrrolidine, cyclohexylamine and butylamine is included.

[14] A nitrogen oxide-reducing catalyst comprising the FER-type zeolite described in any one of [1] to [6].

[15] A method for reducing nitrogen oxides, the method comprising a step of bringing a nitrogen oxide-reducing catalyst containing the FER-type zeolite described in any one of [1] to [6] into contact with a nitrogen oxide-containing gas.

ADVANTAGEOUS EFFECTS OF INVENTION

According to the present disclosure, at least one of an FER-type zeolite that generates less $N_2O$ during nitrogen oxide reduction compared to a typical iron-containing FER-type zeolite and that can be industrially applied, a production method therefor and a nitrogen oxide-reducing catalyst containing the same can be provided.

BRIEF DESCRIPTION OF DRAWINGS

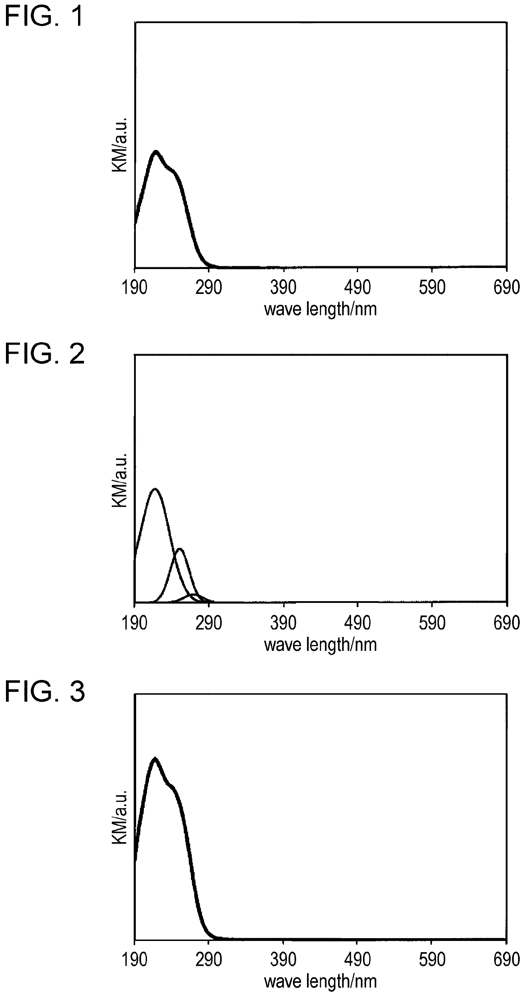

[Fig. 1] Fig. 1 is an UV-VIS spectrum of an iron-containing FER-type zeolite of Example 1.
[Fig. 2] Fig. 2 is an UV-VIS spectrum (after waveform separation) of the iron-containing FER-type zeolite of Example 1.
[Fig. 3] Fig. 3 is an UV-VIS spectrum of an iron-containing FER-type zeolite of Example 3.

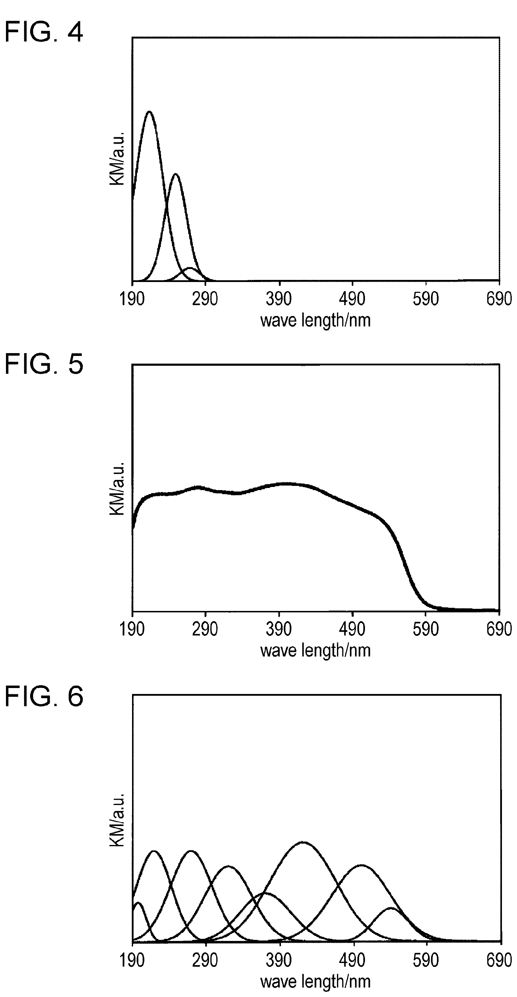

[Fig. 4] Fig. 4 is an UV-VIS spectrum (after waveform separation) of the iron-containing FER-type zeolite of Example 3.
[Fig. 5] Fig. 5 is an UV-VIS spectrum of an iron-containing FER-type zeolite of Comparative Example 1.
[Fig. 6] Fig. 6 is an UV-VIS spectrum (after waveform separation) of the iron-containing FER-type zeolite of Comparative Example 1.

DESCRIPTION OF EMBODIMENTS

The present disclosure will now be described through some examples of embodiments.

"Zeolite" is a compound having an ordered structure where framework atoms (hereinafter may also be referred to as "T atoms") are bonded through oxygen (O) where T atoms are at least one of a metal atom or a metalloid atom. The metal atom is, for example, at least one selected from the group consisting of aluminum (Al), titanium (Ti), iron (Fe), zinc (Zn), gallium (Ga) and tin (Sn), is preferably at least one of aluminum and iron and is more preferably aluminum. The metalloid atom is, for example, at least one selected from the group consisting of boron (B), silicon (Si), germanium (Ge), arsenic (As), antimony (Sb) and tellurium (Te) and is preferably silicon.

"Zeolite-like substance" is a compound having an ordered structure where T atoms are bonded through oxygen where T atoms include at least an atom (hereinafter may also be referred to as "non-metal atom") other than metals and metalloids. An example of the non-metal atom is phosphorus (P). Examples of the zeolite-like substance include complex phosphorus compounds containing phosphorus (P) as a T atom, such as aluminophosphate (AlPO) and silicoalumino-phosphate (SAPO). For the purpose of clarity, in this embodiment, zeolites do not include zeolite-like substances.

"Ordered structure (hereinafter may also be referred to as a "zeolite structure")" of a zeolite or a zeolite-like substance is a framework structure specified by a structure code defined by the Structure Commission of the International Zeolite Association (hereinafter this code may be simply referred to as a "structure code"). For example, the FER structure is a framework structure specified by a structure code "FER". A zeolite structure may be identified by comparing with XRD patterns (hereinafter may also be referred to as "reference patterns") set forth in CHA under Zeolite Framework Types in the website of the IZA Structure Commission, http://www.iza-struture.org/databases/. Note that such terms as zeolite structure, framework structure, crystal structure and crystal phase used in this embodiment are all synonymous.

In this embodiment, the notation "-type zeolite" as in "FER-type zeolite" means a zeolite having a zeolite structure of that structure code.

"Aluminosilicate" is a complex oxide having a structure composed of repetition of a network of aluminum (Al) and silicon (Si) bonded through oxygen (O). Of aluminosilicates, those which have a crystalline XRD peak in a powder X-ray diffraction (hereinafter may be referred to as "XRD") pattern are "crystalline aluminosilicates" and those which have no crystalline XRD peak are "amorphous aluminosilicates".

The XRD pattern in this embodiment is an XRD pattern obtained by XRD measurement under the following conditions.

Acceleration current/voltage: 40 mA/40 kV
Radiation source: Cu K$\alpha$ radiation ($\lambda$ = 1.5405 Å)
Measurement mode: step scan
Scan condition: 40°/minute
Measurement time: 3 seconds
Measurement range: $2\theta$ = 3° to 43°
Divergence height slit: 10 mm
Divergence/incident slit: 1°
Receiving slit: open
Receiving solar slit: 5°
Detector: semiconductor detector (D/teX Ultra)
Filter: Ni filter

An XRD pattern can be measured by using a common powder X-ray diffractometer (for example, Ultima IV Protectus produced by Rigaku Holdings Corporation). In addition, a crystalline XRD peak is a peak detected by XRD pattern analysis with common analysis software through identification of $2\theta$ of the peak top, in particular, an XRD peak having a full-width-at-half-maximum of $2\theta$ = 0.50° or less.

[Iron-containing FER-type zeolite]

The present embodiment provides an FER-type zeolite that contains iron, and, relative to peaks at a wavelength of 190 nm or more and 600 nm or less in an UV-VIS spectrum, an area fraction of peaks in a spectrum at a wavelength of 300 nm or more and 600 nm or less is 20% or less.

This embodiment provides an FER-type zeolite that contains iron (hereinafter may also be referred to as the "iron-containing FER-type zeolite") and has a crystal structure solely composed of an FER structure, in particular, an FER-type crystalline aluminosilicate. The nitrogen oxide-reducing property is exhibited due to the presence of iron (Fe). Furthermore, compared to copper-containing FER-type zeolites, nitrogen oxides can be reduced while suppressing generation of $N_2O$.

In an XRD pattern of the iron-containing FER-type zeolite of this embodiment, the peak top of an XRD peak of (200) plane is detected at $2\theta = 9.5 \pm 0.2°$, for example.

According to he iron-containing FER-type zeolite of this embodiment, relative to peaks at a wavelength of 190 nm or more and 600 nm or less in an UV-VIS spectrum, an area fraction (hereinafter this area fraction may also be referred to as the "300 nm-600 nm spectral intensity ratio") of peaks in a spectrum at a wavelength of 300 nm or more and 600 nm or less is 20% or less. In an UV-VIS spectrum of the iron-containing FER-type zeolite, the presence of iron can be confirmed through the presence of peaks at a wavelength of 190 nm or more and 600 nm or less, and the higher the dispersed state of iron, the lower the wavelength at which a peak can be detected. In the iron-containing FER-type zeolite of this embodiment, iron is contained as at least one iron species selected from the group consisting of isolated iron ($Fe^{3+}$), clustered iron ($Fe_xO_y$) and iron oxide ($Fe_2O_3$) particles. In this embodiment, a peak at a wavelength of 190 nm or more and less than 300 nm, a peak at a wavelength of 300 nm or more and 400 nm or less and a peak at a wavelength of more than 400 nm and 600 nm or less can be respectively considered as a peak corresponding to isolated iron ($Fe^{3+}$), a peak corresponding to clustered iron ($Fe_xO_y$), and a peak corresponding to iron oxide ($Fe_2O_3$) particles. When the 300 nm-600 nm spectral intensity ratio exceeds 20%, iron oxide and clustered iron account for a large fraction of iron contained in the FER-type zeolite, and a nitrogen oxide-reducing property is only as good as that of typical iron-containing FER-type zeolites despite the presence of the isolated iron.

According to the iron-containing FER-type zeolite of this embodiment, relative to peaks at a wavelength of 190 nm or more and 600 nm or less in an UV-VIS spectrum, an area fraction of peaks at a wavelength of 190 nm or more and less than 300 nm (hereinafter this area fraction may also be referred to as the "190 nm-300 nm spectral intensity ratio") is preferably 70% or more, 80% or more or 90% or more and 100% or less, less than 100% or 99% or less, and is, for example, 70% or more and 100% or less, 80% or more and less than 100% or 90% or more and 99% or less.

According to the iron-containing FER-type zeolite of this embodiment, relative to peaks at a wavelength of 190 nm or more and 600 nm or less in an UV-VIS spectrum, an area fraction of peaks at a wavelength of 300 nm or more and 400 nm or less (hereinafter this area fraction may also be referred to as the "300 nm-400 nm spectral intensity ratio") is preferably 20% or less, 5.0% or less, 3.0% or less or 1.0% or less and 0% or more, more than 0% or 0.1% or more, and is, for example, 0% or more and 20% or less, 0% or more and 5.0% or less, 0% or more and 3.0% or less, more than 0% and 3.0% or less or 0.1% or more and 1.0% or less.

According to the iron-containing FER-type zeolite of this embodiment, relative to peaks at a wavelength of 190 nm or more and 600 nm or less in an UV-VIS spectrum, an area fraction of peaks at a wavelength of more than 400 nm and 600 nm or less (hereinafter this area fraction may also be referred to as the "400 nm-600 nm spectral intensity ratio") is preferably 20% or less, 5.0% or less, 3.0% or less or 1.0% or less and 0% or more, more than 0% or 0.1% or more, and is, for example, 0% or more and 20% or less, 0% or more and 5.0% or less, 0% or more and 3.0% or less, more than 0% and 3.0% or less or 0.1% or more and 1.0% or less.

These spectral intensity ratios [%] respectively correspond to the proportions [%] of the iron species in the iron-containing FER-type zeolite, and the 190 nm-300 nm spectral intensity ratio, the 300 nm-400 nm spectral intensity ratio and 400 nm-600 nm spectral intensity ratio respectively correspond to the isolated iron ($Fe^{3+}$), clustered iron ($Fe_xO_y$) and iron oxide particles ($Fe_2O_3$).

Thus, the iron-containing FER-type zeolite of this embodiment can be considered as an FER-type zeolite that contains iron in which the proportion of the clustered iron and the iron oxide particles is 20% or less; in other words, the iron-containing FER-type zeolite of this embodiment can be considered as an FER-type zeolite that contains iron in which the proportion of the isolated iron is 80% or more.

Furthermore, the iron-containing FER-type zeolite of this embodiment can be considered as an iron-containing FER-type zeolite in which: the total proportion of the isolated iron, the clustered iron and the iron oxide particles is 100%;

the proportion of the isolated iron is preferably 70% or more, 80% or more or 90% or more and 100% or less, less than 100% or 99% or less, and is 70% or more and 100% or less, 80% or more and less than 100% or 90% or more and 99% or less;

the proportion of the clustered iron is preferably 20% or less, 5.0% or less, 3.0% or less or 1.0% or less and 0% or more, more than 0% or 0.1% or more, and is 0% or more and 20% or less, 0% or more and 5.0% or less, 0% or more and 3.0% or less, more than 0% and 3.0% or less or 0.1% or more and 1.0% or less; and

the proportion of the iron oxide particles is preferably 20% or less, 5.0% or less, 3.0% or less or 1.0% or less and 0% or more, more than 0% or 0.1% or more, and is 0% or more and 20% or less, 0% or more and 5.0% or less, 0% or more and 3.0% or less, more than 0% and 3.0% or less or 0.1% or more and 1.0% or less.

The UV-VIS spectrum of this embodiment may be measured under the following conditions by using a common UV-VIS spectrophotometer (for example, V-770 UV-Visible spectrophotometer produced by JASCO Corporation).

Integrating sphere unit: ISN-923 (produced by JASCO Corporation)

Measurement mode: diffuse and specular method
Wavelength: 190 to 700 nm
Temperature: room temperature
Slit width: 5 nm
Background: barium sulfate

The obtained UV-VIS spectrum may be corrected so that the reflectance (hereinafter may also be referred to as "$\gamma\infty$" or "relative reflectance") of the iron-containing FER-type zeolite of this embodiment relative to the reflectance of barium sulfate at a wavelength of 700 nm is 1, and then the corrected UV-VIS spectrum may be subjected to KM (Kubelka-Munk) conversion by using the following KM function ($f(\gamma\infty)$).

$$f(\gamma\infty) = (1 - \gamma\infty)^2/2\gamma\infty$$

The UV-VIS spectrum after the KM conversion may be subjected to fitting and waveform separation by using common analytic software (for example, Fityk 0.9.8) and Gaussian as the fitting function, then the peak areas respectively at a wavelength of 190 nm or more and less than 300 nm, 300 nm or more and 400 nm or less and more than 400 nm and 600 nm may be determined, and the total thereof may be used as the peak area at a wavelength of 190 nm or more and 600 nm or less. The area fraction may be determined from the ratio of the peak area of each wavelength range to the obtained peak area at a wavelength of 190 nm or more and 600 nm or less.

For yielding practically feasible nitrogen oxide-reducing properties, the iron content is, for example, 0.1 mass% or more, 0.5 mass% or more or 1.0 mass% or more and 5.0 mass% or less or 3.5 mass% or less, and is preferably 0.1 mass% or more and 5.0 mass% or less, 1.0 mass% or more and 5.0 mass% or less or 1.0 mass% or more and 3.5 mass% or less.

The "iron content" in this embodiment is the mass ratio [mass%] of iron (Fe) relative to the mass of the iron-containing FER-type zeolite. The mass of the iron-containing FER-type zeolite is the total mass of aluminum as $Al_2O_3$, silicon as $SiO_2$ and iron (Fe) contained in the iron-containing FER-type zeolite. The mass of the iron-containing FER-type zeolite may be determined by measuring the mass after treating the iron-containing FER-type zeolite in an air atmosphere at 100°C for 2 hours.

The iron-containing FER-type zeolite of this embodiment preferably contains a large amount of isolated iron, and the content (hereinafter this content may also be referred to as the "isolated $Fe^{3+}$ content") of the isolated iron preferably accounts for 1.0 mass% or more, 1.2 mass% or more or 1.5 mass% or more of the iron content. The isolated $Fe^{3+}$ content is preferably high; however, in such a case, the isolated $Fe^{3+}$ content becomes equal to the upper limit of the iron content, for example, 5.0 mass% or less or 3.5 mass% or less. Preferable examples of the isolated $Fe^{3+}$ content are 1.0 mass% or more and 5.0 mass% or less, 1.2 mass% or more and 3.5 mass% or less and 1.5 mass% or more and 3.5 mass% or less.

The isolated $Fe^{3+}$ content can be determined from the following equation.

Isolated $Fe^{3+}$ content [mass%]

= iron content [mass%] × proportion of isolated iron [%]

= iron content [mass%] × 190 nm-300 nm spectrum intensity ratio [%]

Similarly, the content (hereinafter may also be referred to as the "cluster content") of the clustered iron in the iron content and the content (hereinafter may also be referred to as the "iron oxide content") of the iron oxide particles in the iron content can be determined from the following equations.

Cluster content [mass%]

= iron content [mass%] × proportion of isolated iron [%]

= iron content [mass%] × 300 nm-400 nm spectrum intensity ratio [%]

Iron oxide content [mass%]

= iron content [mass%] × proportion of isolated iron [%]

= iron content [mass%] × 400 nm-600 nm spectrum intensity ratio [%]

Iron contained in the iron-containing FER-type zeolite of this embodiment is to be in any state capable of functioning as an active metal, may be present on the surface, in the pores and at the ion exchange sites of the FER-type zeolite and is preferably present at least in the pores therein. Note that, in the iron-containing FER-type zeolite of this embodiment, iron does not have to substitute the framework structure.

The iron-containing FER-type zeolite of this embodiment is to contain iron as an active metal but may additionally contain active metals other than iron, for example, at least one element selected from the group consisting of copper (Cu), manganese (Mn), zirconium (Zr), yttrium (Y), cerium (Ce), lanthanum (La) and calcium (Ca), at least one of copper and manganese or copper.

The silica-to-alumina molar ratio (hereinafter may also be referred to as the "$SiO_2/Al_2O_3$ ratio") of the iron-containing FER-type zeolite of this embodiment may be any value at which crystal collapse is inhibited upon exposure to a high-temperature high-humidity atmosphere, is, for example, 5 or more, 10 or more or 15 or more and 50 or less, 30 or less or 20 or less, and is preferably 5 or more and 50 or less, 10 or more and 30 or less or 15 or more and 20 or less.

The iron-containing FER-type zeolite of this embodiment is preferably substantially free of fluorine (F), specifically, the fluorine content is preferably 0 mass ppm. Considering the margin of measurement error, the fluorine content of the iron-containing FER-type zeolite of this embodiment is to be equal to or lower than the detection limit, for example, 0 mass ppm or more and 100 mass ppm or less, 0 mass ppm or more and 50 mass ppm or less or 0 mass ppm or more and 5 mass ppm or less.

The shape of the iron-containing FER-type zeolite of this embodiment may be any shape appropriate for the usage, for example, at least one of a powder and a shaped body. In the case of a powder, the powder may be applied or wash-coated to a substrate such as a honeycomb structure to prepare a catalyst member. In the case of a shaped body, the shaped body may have an initial shape appropriate for the usage, for example, at least one selected from the group consisting of a spherical shape, a substantially spherical shape, an elliptical shape, a disk shape, a columnar shape, a polygonal shape, an irregular shape and a petal shape.

The iron-containing FER-type zeolite of this embodiment can be used in known usages of zeolites, for example, at least one selected from the group consisting of a catalyst, an adsorbent and supports thereof or at least one of a catalyst and a catalyst support.

The iron-containing FER-type zeolite of this embodiment is suitable for use as at least one of a nitrogen oxide-reducing catalyst and a support thereof, as a nitrogen oxide-reducing catalyst, or, in particular, as a nitrogen oxide-reducing catalyst for selective contact reduction.

For example, when the iron-containing FER-type zeolite of this embodiment is used as a nitrogen oxide-reducing catalyst, the iron-containing FER-type zeolite may be used in a nitrogen oxide-reducing method that includes a step of causing the iron-containing FER-type zeolite of this embodiment to contact a nitrogen oxide-containing gas (hereinafter this step may also be referred to as the "contact step").

The nitrogen oxide-containing gas may be any gas that contains nitrogen oxides (NOx), is preferably a gas containing at least dinitrogen monoxide ($N_2O$), a gas containing at least one selected from the group consisting of nitrogen monoxide, nitrogen dioxide, dinitrogen trioxide, dinitrogen tetraoxide and dinitrogen monoxide or a gas containing at least one selected from the group consisting of nitrogen monoxide, nitrogen dioxide and dinitrogen monoxide, and is more preferably. The nitrogen oxide-containing gas may contain a component other than nitrogen oxides, and may contain at least one selected from the group consisting of a hydrocarbon, carbon monoxide, carbon dioxide, hydrogen, nitrogen, oxygen, sulfur oxide and water. Specific examples of the nitrogen oxide-containing gas include waste gas discharged from internal combustion engines and waste gas discharged from at least one selected from the group consisting of an automobile, a ship, a boiler and a gas turbine.

In the contact step, any conditions under which the iron-containing FER-type zeolite of this embodiment comes into contact with the nitrogen oxide-containing gas may be employed, and examples of the contact conditions are as follows.

Space velocity: 500 to 500,000 hours$^{-1}$, preferably 2000 to 300,000 hours$^{-1}$
Contact temperature: 120°C or higher and 600°C or lower, preferably 150°C or higher and 550°C or lower

Contacting in the contact step is preferably performed in the presence of a reducing agent. The reducing agent is, for example, at least one selected from the group consisting of ammonia, urea, an organic amine, a hydrocarbon, an alcohol, a ketone, carbon monoxide and hydrogen, at least one selected from the group consisting of ammonia, a hydrocarbon, urea and an organic amine, at least one of ammonia and a hydrocarbon or ammonia.

[Method for producing iron-containing FER-type zeolite]

A preferable example of a method for producing an iron-containing FER-type zeolite of this embodiment is a method for producing an FER-type zeolite, the method involving a step of crystallizing a composition containing a silica alumina source, an iron source, an alkali source and water in which a molar ratio of iron to silicon as $SiO_2$ is less than 0.1.

As a method for producing an iron-containing FER-type zeolite, a typical FER-type zeolite.

The production method of this embodiment includes a step (hereinafter may also be referred to as "crystallizing step") of crystallizing a composition (hereinafter may also be referred to as "raw material compositions") containing a silica alumina source, an iron source, an alkali source and water, in which a molar ratio of iron to silicon as $SiO_2$ is less than 0.1.

The silica alumina source is a compound containing aluminum (Al) and silicon (Si) and is preferably an amorphous compound containing aluminum and silicon. A specific example of the silica alumina source is amorphous aluminosilicate. It is considered that, in this embodiment, crystallization progresses while dispersing of iron is promoted compared to when an aluminum source and a silicon source are separately contained.

The iron source is a compound containing iron and may be an iron compound that is evenly dispersed in the raw material composition. Specific examples of the iron compound include at least one selected from the group consisting of iron nitrate, iron sulfate, iron oxide, iron chloride, iron oxyhydroxide and, at least one selected from the group consisting of iron hydroxide, iron sulfate and iron nitrate, at least one of iron sulfate and iron nitrate and iron sulfate.

The alkali source is a compound containing an alkali metal element, and examples thereof include a compound containing at least one selected from the group consisting of sodium, potassium, rubidium and cesium, a compound containing at least one selected from the group consisting of sodium, potassium and cesium, a compound containing at least one of sodium and potassium and a compound containing sodium. Examples of the alkali source (hereinafter, when the alkali metal is sodium or the like, the source may be referred to as the "sodium source" or the like) include at least one selected from the group consisting of a hydroxide, a fluoride, a bromide, an iodide, a sulfate, a nitrate and a carbonate containing the aforementioned alkali metal element, at least one selected from the group consisting of a hydroxide, a bromide and an iodide containing the aforementioned alkali metal element and a hydroxide containing the aforementioned alkali metal element.

To promote crystallization of the FER-type zeolite without using an expensive organic structure-directing agent, the alkali source preferably contains at least a sodium source or a potassium source, more preferably contains at least a potassium source, yet more preferably contains a sodium source and a potassium source and still more preferably is a sodium source and a potassium source.

Pure water, ion exchange water and water contained in other starting substances such as constitution water, hydrate water and a solvent may be considered as the water in the raw material composition.

It should be noted that, when starting substances such as the iron source contain alkali metal elements, these starting substances may also be considered as the alkali source. Similarly, when the iron source or the like contains aluminum, such an iron source is also considered as an alumina source.

The raw material composition is preferably free of an organic structure-directing agent (hereinafter may also be referred to as "SDA") source and is particularly preferably free of hexamethyleneimine since the obtained FER-type zeolite becomes expensive if otherwise. However, the raw material composition may contain an SDA source to accelerate crystallization. The organic structure-directing agent source is at least one of an SDA that can direct the FER-type zeolite and compounds of the SDA, and may be an amine compound that can direct the FER-type zeolite. To facilitate industrial application of the production method of this embodiment, the SDA source is preferably an inexpensive amine compound, and examples thereof include an amine other than hexamethyleneimine, at least one selected from the group consisting of pyridine, pyrrolidine, cyclohexylamine and butylamine and at least one selected from the group consisting of pyridine, pyrrolidine and butylamine.

The molar ratio (hereinafter may also be referred to as "$SiO_2/Al_2O_3$") of iron relative to silicon as $SiO_2$ relative to aluminum as $Al_2O_3$ in the raw material composition is, for example, 5 or more, 10 or more or 15 or more and 50 or less, 30 or less, 25 or less or 18 or less, and is preferably 5 or more and 50 or less, 10 or more and 30 or less or 15 or more and 25 or less.

The molar ratio (hereinafter may also be referred to as "$Fe/SiO_2$") of iron relative to silicon as $SiO_2$ in the raw material composition is preferably less than 0.1, 0.05 or less or 0.03 or less. At $Fe/SiO_2$ exceeding 0.1, iron in a low activity state, such as aggregated iron, is incorporated into the FER-type zeolite. The lower limit of $Fe/SiO_2$ of the raw material composition is to be more than 0, 0.001 or more or 0.01 or more, for example, more than 0 and less than 0.1, more than 0 and 0.5 or less, 0.001 or more and 0.5 or less, 0.01 or more and 0.05 or less or 0.01 or more and 0.03 or less.

The total molar ratio (hereinafter may also be referred to as "$M/SiO_2$") of the alkali metal elements relative to silicon as $SiO_2$ in the raw material composition is preferably less than 0.40, 0.38 or less or 0.30 or less and 0.05 or more, 0.20 or more or 0.25 or more. Preferable examples of $M/SiO_2$ are 0.05 or more and less than 0.40, 0.20 or more and 0.38 or less and 0.25 or more and 0.30 or less.

The total molar ratio (hereinafter may also be referred to as "$K/SiO_2$") of potassium relative to silicon as $SiO_2$ in the raw material composition is, for example, less than 0.40, 0.30 or less or 0.15 or less and 0 or more, more than 0 or 0.1 or more and is preferably more than 0 and less than 0.40, 0.1 or more and 0.30 or less or 0.1 or more and 0.15 or less.

The molar ratio (hereinafter may also be referred to as "$H_2O/SiO_2$") of water relative to silicon as $SiO_2$ in the raw material composition is 50 or less and is preferably 40 or less or 25 or less to facilitate crystallization of the iron-containing FER-type zeolite in which iron is more thoroughly dispersed. $H_2O/SiO_2$ is 5 or more, 10 or more or 13 or more and is preferably 5 or more and 40 or less, 10 or more and 40 or less or 13 or more and 25 or less.

The preferable compositions of the raw material composition are, for example, the following molar compositions. Note that in the molar compositions described below, M represents alkali metals; for example, when the alkali metal is sodium and potassium, M may be considered as (Na + K).

| | |
|---|---|
| $SiO_2/Al_2O_3$ = | 5 or more, 10 or more or 15 or more and 50 or less, 30 or less, 25 or less or 18 or less. |
| $Fe/SiO_2$ = | more than 0, 0.001 or more, 0.01 or more or 0.02 or more and less than 0.1, 0.05 or less or 0.03 or less. |
| $M/SiO_2$ = | 0.05 or more, 0.20 or more or 0.25 or more and less than 0.40, 0.38 or less or 0.30 or less. |
| K/M = | 0 or more, more than 0, 0.10 or more or 0.30 or more and 0.9 or less, 0.7 or less or 0.5 or less. |
| $H_2O/SiO_2$ = | 5 or more, 10 or more or 13 or more and 50 or less, 40 or less or 25 or less. |

More preferable compositions of the raw material composition are, for example, the following molar compositions.

$SiO_2/Al_2O_3$ = 5 or more and 50 or less
$Fe/SiO_2$ = more than 0 and less than 0.1
$M/SiO_2$ = 0.05 or more and less than 0.40
K/M = 0 or more and 0.9 or less
$H_2O/SiO_2$ = 5 or more and 50 or less

Particularly preferable compositions of the raw material composition are, for example, the following molar compositions.

$SiO_2/Al_2O_3$ = 10 or more and 30 or less
$Fe/SiO_2$ = 0.01 or more and 0.05 or less
$M/SiO_2$ = 0.20 or more and 0.38 or less
K/M = 0.10 or more and 0.7 or less
$H_2O/SiO_2$ = 5 or more and 25 or less

To promote use of production facilities made of common materials, the raw material composition is preferably free of fluorine (F) and phosphorus (P) and preferably has a fluorine content of 100 mass ppm or less or a fluorine content equal to or lower than the detection limit (10 mass ppm or less). Similarly, the phosphorus content is preferably 100 mass ppm or less or is more preferably equal to or lower than the detection limit (0.01 mass ppm or less).

To accelerate crystallization of the raw material composition, the raw material composition may contain a seed crystal. The seed crystal is any zeolite that accelerates crystallization of an FER-type zeolite, and is preferably at least one selected from the group consisting of a CHA-type zeolite, an AEI-type zeolite, an MOR-type zeolite, an FER-type zeolite and an AFX-type zeolite, in particular, an FER-type zeolite.

In the crystallizing step, the raw material composition is crystallized. As a result, the iron-containing FER-type zeolite can be obtained as a crystallized product. The crystallization may be carried out by a hydrothermal treatment under conditions that cause crystallization of an iron-containing FER-type zeolite. Preferable crystallization conditions are the following conditions.

Pressure: self-generated pressure
Crystallization temperature: 100°C or higher, 160°C or higher or 175°C or higher and 200°C or lower or 190°C or lower.

The crystallization time may be any time for which the iron-containing FER-type zeolite is sufficiently crystallized, and may be set, as appropriate, according to the crystallization method and the amount of the raw material composition used in crystallization. Examples of the crystallization time include 4 hours or more, 8 hours or more, 24 hours or more or 48 hours or more and 150 hours or less, 100 hours or less or 80 hours or less. In order to produce an iron-containing FER-type zeolite at practical productivity, the crystallization time is preferably 4 hours or more and 150 hours or less, 8 hours or more and 100 hours or less or 24 hours or more and 48 hours or less.

In order for the crystallization to proceed more evenly, crystallization is preferably carried out while stirring the raw material composition. Stirring may involve directly stirring the raw material composition or stirring the container containing the raw material composition.

The crystallized product (iron-containing FER-type zeolite) obtained by the crystallization may be recovered by any method, for example, by solid-liquid separation, followed by washing, drying and recovering.

Solid-liquid separation may be any method with which the raw material composition after crystallization can be separated into a solid component (crystallized product) and a liquid phase, and an example thereof is at least one selected from the group consisting of filtration, decantation and centrifugal separation.

Washing may be any method with which impurities contained in the recovered crystallized product can be removed, and an example thereof is washing with pure water.

Drying may be any method with which moisture physically adsorbing to the crystallized product can be removed, and is, for example, at least one of stationary drying and spray drying, and the drying may be performed in an air atmosphere at 100°C or higher and 120°C or lower.

In order to remove the SDA contained in the iron-containing FER-type zeolite (the crystallized product after crystallization), the production method of this embodiment may include a step of removing the organic structure-directing agent from the crystallized product (hereinafter this step may also be referred to as the "SDA removing step"). In the SDA removing step, the method for removing the SDA may be any, for example, at least one selected from the group consisting of a liquid-phase treatment that uses an acidic aqueous solution, an exchange treatment using a resin, a pyrolysis treatment and a calcination treatment. From the viewpoint of production efficiency, the SDA removing step is preferably at least one of a pyrolysis treatment and a calcination treatment and more preferably a calcination treatment. Preferable calcination conditions are the following conditions.

Calcination atmosphere: air atmosphere
Calcination temperature: 400°C or higher or 560°C or higher and
700°C or lower or 650°C or lower.

The calcination time may be set as appropriate according to the calcination method and the crystallization product to be calcined, and is, for example, 1 hour or more and 10 hours or less, 2 hours or more and 8 hours or less or 3 hours or more and 5 hours or less.

In order to decrease the alkali metal content in the iron-containing FER-type zeolite, the production method of this embodiment may include a step of ion-exchanging the iron-containing FER-type zeolite (hereinafter this step may also be referred to as the "ion exchanging step"). Ion exchange may be any method with which the alkali metal content is decreased, for example, mixing the iron-containing FER-type zeolite with an aqueous ammonium chloride solution and ion-exchanging the resulting mixture.

If necessary, the iron-containing FER-type zeolite after the ion exchange may be calcined.

The production method of this embodiment may include, in addition to or instead of the ion exchanging step, a step of mixing the iron-containing FER-type zeolite with a metal compound (hereinafter this step may also be referred to as the "metal support step"). As a result, any desired metal element that suits the purpose can be supported on the iron-containing FER-type zeolite.

The mixing method may be any method with which the metal compound can be supported on the iron-containing FER-type zeolite, and is, for example, at least one selected from the group consisting of an ion exchange method, an incipient wetness impregnation method, an evaporation and drying method, a precipitation supporting method and a physical mixing method.

EXAMPLES

The present disclosure will now be described through examples. However, the present disclosure is not limited by the description below. First, the evaluation methods are described.

(Crystal identification)

A sample was subjected to XRD measurement by using a powder X-ray diffractometer (instrument name: Ultima IV produced by Rigaku Holdings Corporation). Measurement conditions were as follows.

Radiation source: Cu K$\alpha$ radiation ($\lambda$ = 1.5405 Å)
Measurement mode: step scan

Scan condition: 40°/minute
Measurement time: 3 seconds
Measurement range: $2\theta = 5°$ to $43°$

(Compositional analysis)

A sample was dissolved in a mixed aqueous solution of hydrofluoric acid and nitric acid to prepare a sample solution. An ICP device (device name: OPTIMA 5300DV produced by PerkinElmer) was used to perform inductively coupled plasma atomic emission spectroscopy (ICP-AES) on the sample solution.

(Measurement of iron dispersibility)

An UV-VIS spectrophotometer (device name: V-770 UV-Visible spectrophotometer produced by JASCO Corporation) was used to measure the UV-Vis spectrum of the sample. Measurement conditions were as follows.

Integrating sphere unit: ISN-923 (produced by JASCO Corporation)
Measurement mode: diffuse and specular method
Wavelength: 190 to 700 nm
Temperature: room temperature
Slit width: 5 nm
Background: barium sulfate

From the obtained UV-Vis spectrum, fitting and waveform separation were performed by using common analysis software (software name: Fityk 0.9.8) and Gaussian as the fitting function, and then the peak areas respectively at a wavelength of 190 nm or more and less than 300 nm, at a wavelength of 300 nm or more and 400 nm or less and at a wavelength of more than 400 nm and 600 nm were determined, and then a 300 nm-600 nm spectral intensity ratio [%], a 190 nm-300 nm spectral intensity ratio (proportion of isolated iron ($Fe^{3+}$)) [%], a 300 nm-400 nm spectral intensity ratio (proportion of clustered iron ($Fe_xO_y$)) [%] and a 400 nm-600 nm spectral intensity ratio (proportion of iron oxide particles ($Fe_2O_3$)) [%] were determined.

In addition, from the proportion of the isolated iron and the iron content determined by the aforementioned compositional analysis, the contents of the respective iron species were determined from the following equations.

Isolated $Fe^{3+}$ content [mass%]

= iron content [mass%] × proportion of isolated iron ($Fe^{3+}$) [%]

= iron content [mass%] × 190 nm-300 nm spectrum intensity ratio [%]

Cluster content [mass%]

= iron content [mass%] × proportion of isolated iron [%]

= iron content [mass%] × 300 nm-400 nm spectrum intensity ratio [%]

Iron oxide content [mass%]

= iron content [mass%] × proportion of isolated iron [%]

= iron content [mass%] × 400 nm-600 nm spectrum intensity ratio [%]

EXAMPLE 1

48 mass% of an aqueous sodium hydroxide solution, 48 mass% of an aqueous potassium hydroxide solution, an iron(III) nitrate nonahydrate, pure water and amorphous aluminosilicate ($SiO_2/Al_2O_3 = 17.9$) were mixed to obtain a raw material composition having the following molar compositions.
SiO$_2$/Al$_2$O$_3$ = 17.9
Fe/SiO$_2$ = 0.016
(Na + K)/SiO$_2$ = 0.280
(Na/SiO$_2$ = 0.163, K/SiO$_2$ = 0.117)
K/(Na + K) = 0.418
H$_2$O/SiO$_2$ = 16

To the obtained raw material composition, an FER-type zeolite (SiO$_2$/Al$_2$O$_3$ = 18.0) was added so that the seed crystal content was 2.0 mass%. The raw material composition after mixing was packed in an 80 mL airtight container and was subjected to a hydrothermal treatment at 180°C for 40 hours while being rotated at 55 rpm so as to obtain a crystallized product. The obtained crystallized product was solid-liquid-separated, washed with pure water, dried in air at 110°C and recovered. The crystallized product was a zeolite composed of a single phase of an FER-type zeolite, and SiO$_2$/Al$_2$O$_3$ was 18.0.

The obtained crystallized product was calcined in air at 600°C for 2 hours and then ion-exchanged with a 20 mass% aqueous ammonium chloride solution at 60°C. The crystallized product after the ion exchange was washed with a sufficient amount of pure water and dried in air at 110°C to obtain an iron-containing FER-type zeolite of this example.

The iron-containing FER-type zeolite of this example was a zeolite composed of a single phase of an FER-type zeolite, SiO$_2$/Al$_2$O$_3$ was 18.0, the alkali metal content was less than 0.1 mass%, and the Fe content was 1.4 mass%. Furthermore, the 190 nm-300 nm spectral intensity ratio (proportion of the isolated iron) was 99.8%, the 300 nm-400 nm spectral intensity ratio (proportion of the clustered iron) was 0.2%, the 400 nm-600 nm spectral intensity ratio (proportion of the iron oxide particles) was 0%, the 300 nm-600 nm spectral intensity ratio was 0.2%, and the isolated Fe$^{3+}$ content was 1.4 mass%. The peak top of the XRD peak of the (200) plane was at 2θ of 9.3.

EXAMPLE 2

An iron-containing FER-type zeolite of this example was obtained as in Example 1 except that the raw material composition had the following molar compositions.

SiO$_2$/Al$_2$O$_3$ = 17.9
Fe/SiO$_2$ = 0.024
(Na + K)/SiO$_2$ = 0.305
Na/SiO$_2$ = 0.177, K/SiO$_2$ = 0.128)
K/(Na + K) = 0.420
H$_2$O/SiO$_2$ = 16

The iron-containing FER-type zeolite of this example was a zeolite composed of a single phase of an FER-type zeolite, SiO$_2$/Al$_2$O$_3$ was 18.2, the alkali metal content was less than 0.1 mass%, and the Fe content was 2.0 mass%. The peak top of the XRD peak of the (200) plane was at 2θ of 9.3.

EXAMPLE 3

An iron-containing FER-type zeolite of this example was obtained as in Example 1 except that the raw material composition had the following molar compositions.

SiO$_2$/Al$_2$O$_3$ = 17.9
Fe/SiO$_2$ = 0.037
(Na + K)/SiO$_2$ = 0.350
(Na/SiO$_2$ = 0.203, K/SiO$_2$ = 0.147)
K/(Na + K) = 0.420
H$_2$O/SiO$_2$ = 16

The iron-containing FER-type zeolite of this example was a zeolite composed of a single phase of an FER-type zeolite, SiO$_2$/Al$_2$O$_3$ was 18.4, the alkali metal content was less than 0.1 mass%, and the Fe content was 3.0 mass%. Furthermore, the 190 nm-300 nm spectral intensity ratio (proportion of the isolated iron) was 99.7%, the 300 nm-400 nm spectral intensity ratio (proportion of the clustered iron) was 0.3%, the 400 nm-600 nm spectral intensity ratio (proportion of the iron oxide particles) was 0%, the 300 nm-600 nm spectral intensity ratio was 0.3%, and the isolated Fe$^{3+}$ content was 3.0 mass%. The peak top of the XRD peak of the (200) plane was at 2θ of 9.3.

COMPARATIVE EXAMPLE 1

Crystallization, solid-liquid separation, washing and drying were performed as in Example 1 to obtain a crystallized product except that the raw material composition had the following compositions.

$SiO_2/Al_2O_3 = 19.0$
$(Fe/SiO_2 = 0)$
$(Na + K)/SiO_2 = 0.19$
$(Na/SiO_2 = 0.114, K/SiO_2 = 0.076)$
$K/(Na + K) = 0.400$
$H_2O/SiO_2 = 16$

The obtained crystallized product was a zeolite composed of a single phase of an FER-type zeolite, and $SiO_2/Al_2O_3$ was 18.7.

The obtained crystallized product was calcined in air at 600°C for 2 hours. The calcined solid was exchanged with a 20 mass% aqueous ammonium chloride solution (weight of aqueous ammonium chloride solution:weight of zeolite = 1.0) at 60°C, was then washed with a large quantity of water, and was dried at 110°C. The alkali metal content in the dried sample was less than 0.1 mass%. Next, 7.0 g of the dried sample, 1.6 g of an iron(III) nitrate nonahydrate and 2.4 g of pure water were mixed in a mortar. Lastly, the evenly mixed sample was dried in air at 110°C for 5 hours and was calcined at 500°C for 2 hours to obtain an iron-containing FER-type zeolite of this comparative example.

The iron-containing FER-type zeolite of this comparative example was a zeolite composed of a single phase of an FER-type zeolite, $SiO_2/Al_2O_3$ was 18.7, the alkali metal content was less than 0.1 mass%, and the Fe content was 3.0 mass%. Furthermore, the 190 nm-300 nm spectral intensity ratio (proportion of the isolated iron) was 29.6%, the 300 nm-400 nm spectral intensity ratio (proportion of the clustered iron) was 23.2%, the 400 nm-600 nm spectral intensity ratio (proportion of the iron oxide particles) was 47.2%, the 300 nm-600 nm spectral intensity ratio was 70.4%, and the isolated $Fe^{3+}$ content was 0.9 mass%.

It could be confirmed that the iron-containing FER-type zeolite of this comparative example had an iron content similar to that of the iron-containing FER-type zeolite of Example 3 but the proportion of the isolated iron was low, and that, compared to the iron-containing FER-type zeolite of Example 1, the isolated $Fe^{3+}$ content was low.

[Table 1]

| | $SiO_2/Al_2O_3$ ratio | Iron content [wt%] | Proportions of iron species [%] | | | Contents of iron species [wt%] | | |
|---|---|---|---|---|---|---|---|---|
| | | | Isolated iron | Clustered iron | Iron oxide particles | Isolated iron | Clustered iron | Iron oxide particles |
| Example 1 | 18.0 | 1.4 | 99.8 | 0.2 | 0 | 1.4 (1.3972) | 0.0 (0.0028) | 0.0 |
| Example 2 | 18.2 | 2.0 | - | - | - | - | - | - |
| Example 3 | 18.4 | 3.0 | 99.7 | 0.3 | 0 | 3.0 (2.991) | 0.0 (0.009) | 0.0 |
| Comparative Example 1 | 18.7 | 3.0 | 29.6 | 23.2 | 47.2 | 0.9 (0.888) | 0.7 (0.696) | 1.4 (1.416) |
| * "-" indicates absence of measurement. | | | | | | | | |

It could be confirmed from the examples that an iron-containing FER-type zeolite containing iron in a dispersed state, that is, an iron-containing FER-type zeolite having a low 300 nm-600 nm spectral intensity ratio, could be obtained without necessitating an expensive SDA.

Measurement examples

<Hydrothermal endurance treatment>

Each of the iron-containing FRR-type zeolites of Examples and Comparative Example was shaped and crushed to prepare aggregated particles having an aggregate diameter of 12-20 mesh. 3 mL of the obtained aggregated particles were packed in a normal-pressure fixed bed-type flow reactor tube, and then air containing 20 vol% of moisture was distributed under the following conditions to perform hydrothermal endurance treatment.

Air flow velocity: 300 mL/min
Treatment temperature: 700°C
Treatment time: 20 hours

<Nitrogen oxide-reducing treatment>

1.5 mL of the sample in the aggregated particle state was packed in a normal-pressure fixed bed-type flow reactor tube, a nitrogen oxide-containing gas was distributed while the following measurement temperature was retained, and the nitrogen oxide concentration was measured at the inlet and the outlet of the normal-pressure fixed bed-type flow reactor tube. The nitrogen oxide-containing gas flow conditions were as follows.

| Composition of nitrogen oxide-containing gas: | NO | 200 volume ppm |
| | $NH_3$ | 200 volume ppm |
| | $O_2$ | 10 vol% |
| | $H_2O$ | 3 vol% |
| | $N_2$ | balance |

Flow rate of nitrogen oxide-containing gas: 1.5 L/min
Space velocity: 60,000 $hr^{-1}$
Measurement temperature: 150°C, 200°C, 300°C, 500°C, 550°C or 600°C

The nitrogen oxide reduction rate was determined from the following equation and the obtained nitrogen oxide concentration.

$$\text{Nitrogen oxide reduction rate (\%)}$$

$$= \{([NOx]in - [NOx]out)/[NOx]in\} \times 100$$

where [NOx]in represents a nitrogen oxide concentration of the nitrogen oxide-containing gas at the inlet of the normal-pressure fixed bed-type flow reactor tube, and [NOx]out represents a nitrogen oxide concentration of the nitrogen oxide-containing gas at the outlet of the normal-pressure fixed bed-type flow reactor tube.

Furthermore, the amount of $N_2O$ contained in the nitrogen oxide-containing gas at the outlet of the normal-pressure fixed bed-type flow reactor tube was measured and assumed to be the generated $N_2O$ amount.

In the description below, the evaluation results of the amount of $N_2O$ generated in the nitrogen oxide-reducing treatment at 150°C to 300°C from the iron-containing FER-type zeolite before the hydrothermal endurance treatment are indicated in Table 2, and the evaluation results of the amount of $N_2O$ generated in the nitrogen oxide-reducing treatment at 150°C to 300°C from the iron-containing FER-type zeolite after the hydrothermal endurance treatment are indicated in Table 3.

[Table 2]

| | Generated $N_2O$ amount (volume ppm) | | |
| --- | --- | --- | --- |
| | 150°C | 200°C | 300°C |
| Example 1 | 0.5 | 0.5 | 0.5 |
| Example 2 | 0.1 | 0.3 | 0.2 |
| Example 3 | 0.2 | 0.2 | 0.2 |
| Comparative Example 1 | 0.6 | 0.6 | 0.7 |

It could be confirmed that the iron-containing FER-type zeolites of the examples suppressed generation of $N_2O$ in the nitrogen oxide-reducing treatment in the 150°C-200°C low temperature range and the 300°C intermediate temperature range. In particular, the iron-containing FER-type zeolite of Example 3 and the iron-containing FER-type zeolite of Comparative Example 1 both had an iron content of 3 mass%. However, it could be confirmed that, compared to the iron-containing FER-type zeolite of Comparative Example 1 obtained by a post support method, the iron-containing FER-type zeolite of Example 3 prominently suppressed generation of $N_2O$ in the nitrogen oxide-reducing treatment in the 150°C-200°C low temperature range and the 300°C intermediate temperature range.

[Table 3]

|  | Generated $N_2O$ amount (volume ppm) | | |
| --- | --- | --- | --- |
|  | 150°C | 200°C | 300°C |
| Example 1 | 0.5 | 0.5 | 0.5 |
| Example 2 | 0.1 | 0.2 | 0.3 |
| Example 3 | 0.1 | 0.2 | 0.2 |
| Comparative Example 1 | 0.6 | 0.6 | 0.6 |

It could be confirmed that, compared to the iron-containing zeolite of Comparative Example 1, the iron-containing FER-type zeolites of Examples suppressed generation of $N_2O$ in the nitrogen oxide-reducing treatment in the 150°C to 300°C low temperature range even after the hydrothermal endurance treatment.

Next, the evaluation results of the amount of $N_2O$ generated from the iron-containing FER-type zeolite before the hydrothermal endurance treatment in the nitrogen oxide-reducing treatment in the high temperature range are indicated in Table 4, and the evaluation results of the amount of $N_2O$ generated from the iron-containing FER-type zeolite after the hydrothermal endurance treatment in the nitrogen oxide-reducing treatment in the high temperature range are indicated in Table 5.

[Table 4]

|  | Generated $N_2O$ amount (volume ppm) | | |
| --- | --- | --- | --- |
|  | 500°C | 550°C | 600°C |
| Example 1 | 0.0 | 0.0 | 0.0 |
| Comparative Example 1 | 0.3 | 0.2 | 0.2 |

It could be confirmed that, in the nitrogen oxide-reducing treatment in the high temperature range of 500°C or higher, the iron-containing FER-type zeolite of Example 1 produced substantially no $N_2O$ despite the scarcity of iron, which is an active component, and clustered iron, which is an active species in the high temperature range.

[Table 5]

|  | Generated $N_2O$ amount (volume ppm) | | |
| --- | --- | --- | --- |
|  | 500°C | 550°C | 600°C |
| Example 1 | 0.0 | 0.0 | 0.0 |
| Comparative Example 1 | 0.3 | 0.3 | 0.2 |

It could be confirmed that, compared to the iron-containing zeolite of Comparative Example 1, the iron-containing FER-type zeolite of Example 3 suppressed generation of $N_2O$ in the nitrogen oxide-reducing treatment in the high temperature range of 500°C or higher even after the hydrothermal endurance treatment.

Next, the ratio (nitrogen oxide reduction rate retention rate) of the nitrogen oxide reduction rate (%) after the hydrothermal endurance treatment to the nitrogen oxide reduction rate (%) before the hydrothermal endurance treatment is indicated.

[Table 6]

|  | Nitrogen oxide reduction rate retention rate | | |
| --- | --- | --- | --- |
|  | 150°C | 300°C | 500°C |
| Example 1 | 0.80 | 0.89 | 0.94 |

(continued)

| | Nitrogen oxide reduction rate retention rate | | |
|---|---|---|---|
| | 150°C | 300°C | 500°C |
| Example 2 | 0.54 | 0.87 | 0.93 |
| Example 3 | 0.75 | 0.80 | 0.93 |
| Comparative Example 1 | 0.42 | 0.59 | 0.83 |

It could be confirmed that, compared to the iron-containing FER-type zeolite of Comparative Example 1, the iron-containing FER-type zeolites of the examples exhibited stable nitrogen oxide-reducing properties in wide temperature ranges of the nitrogen oxide-reducing treatment from the low temperature to the high temperature.

The nitrogen oxide reduction rates for the nitrogen oxide-reducing treatment at 550°C after the hydrothermal endurance treatment were 77%, 73% and 81% in Examples 1, 2 and 3, respectively, whereas that of the iron-containing FER-type zeolite of Comparative Example 1 was 75%. This could confirm that, although the iron-containing FER-type zeolites of the examples were substantially free of clustered iron which is an active species in the high temperature range, the nitrogen oxide reduction rates thereof after the hydrothermal endurance treatment in the high-temperature range nitrogen oxide-reducing treatment were comparable or superior to that of the typical iron-containing FER-type zeolite containing the clustered iron.

The present disclosure cites the entire contents of the description, the claims, and the abstract of Japanese Patent Application No. 2023-79261 filed May 12, 2023, which is hereby incorporated by reference herein in its entirety.

**Claims**

1.  An FER-type zeolite comprising iron, wherein, relative to peaks at a wavelength of 190 nm or more and 600 nm or less in an UV-VIS spectrum, an area fraction of peaks in a spectrum at a wavelength of 300 nm or more and 600 nm or less is 20% or less.

2.  The FER-type zeolite according to Claim 1, wherein, relative to the peaks at a wavelength of 190 nm or more and 600 nm or less in the UV-VIS spectrum, an area fraction of peaks in a spectrum at a wavelength of more than 400 nm and 600 nm or less is 20% or less.

3.  The FER-type zeolite according to Claim 1 or 2, wherein, relative to the peaks at a wavelength of 190 nm or more and 600 nm or less in the UV-VIS spectrum, an area fraction of peaks in a spectrum at a wavelength of 190 nm or more and less than 300 nm is 80% or more.

4.  The FER-type zeolite according to any one of Claims 1 to 3, wherein an iron content is 5 mass% or less.

5.  The FER-type zeolite according to any one of Claims 1 to 4, wherein a molar ratio of silica to alumina is 5 or more and 50 or less.

6.  The FER-type zeolite according to any one of Claims 1 to 5, comprising at least one element selected from the group consisting of copper (Cu), manganese (Mn), zirconium (Zr), yttrium (Y), cerium (Ce), lanthanum (La) and calcium (Ca).

7.  A method for producing the FER-type zeolite according to any one of Claims 1 to 6, the method comprising: a step of crystallizing a composition containing a silica alumina source, an iron source, an alkali source, water and a seed crystal, wherein a molar ratio of iron to silicon as $SiO_2$ is less than 0.1.

8.  The method according to Claim 7, wherein the alkali source includes at least a sodium source or a potassium source.

9.  The method for producing the FER-type zeolite according to Claim 7 or 8, wherein the composition has molar compositions below wherein M in the molar compositions below represents an alkali metal:

$SiO_2/Al_2O_3$ = 5 or more and 50 or less
$Fe/SiO_2$ = more than 0 and less than 0.1

M/SiO$_2$ = 0.05 or more and less than 0.40

K/M = 0 or more and 0.9 or less

H$_2$O/SiO$_2$ = 5 or more and 50 or less.

10. The method according to any one of Claims 7 to 9, wherein the seed crystal is at least one selected from the group consisting of a CHA-type zeolite, an AEI-type zeolite, an MOR-type zeolite, an FER-type zeolite and an AFX-type zeolite.

11. The method according to any one of Claims 7 to 10, wherein a content of the seed crystal in the raw material composition is more than 0 mass% and 10 mass% or less.

12. The method according to any one of Claims 7 to 11, wherein no organic structure-directing agent source is included.

13. The method according to any one of Claims 7 to 12, wherein at least one organic structure-directing agent source selected from the group consisting of pyridine, pyrrolidine, cyclohexylamine and butylamine is included.

14. A nitrogen oxide-reducing catalyst comprising the FER-type zeolite according to any one of Claims 1 to 6.

15. A method for reducing nitrogen oxides, the method comprising a step of bringing a nitrogen oxide-reducing catalyst containing the FER-type zeolite according to any one of Claims 1 to 6 into contact with a nitrogen oxide-containing gas.

FIG. 1

wave length/nm

FIG. 2

wave length/nm

FIG. 3

wave length/nm

FIG. 4

KM/a.u.

wave length/nm

190    290    390    490    590    690

FIG. 5

KM/a.u.

wave length/nm

190    290    390    490    590    690

FIG. 6

KM/a.u.

wave length/nm

190    290    390    490    590    690

## INTERNATIONAL SEARCH REPORT

International application No.

**PCT/JP2024/017079**

### A. CLASSIFICATION OF SUBJECT MATTER

*C01B 39/44*(2006.01)i; *B01D 53/94*(2006.01)i; *B01J 29/68*(2006.01)i; *B01J 29/88*(2006.01)i
FI:  C01B39/44; B01J29/68 A; B01D53/94 222; B01J29/88 A ZAB

According to International Patent Classification (IPC) or to both national classification and IPC

### B. FIELDS SEARCHED

Minimum documentation searched (classification system followed by classification symbols)

C01B39/44; B01D53/94; B01J29/68; B01J29/88

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2017-512630 A (JOHNSON MATTHEY PUBLIC LIMITED COMPANY) 25 May 2017 (2017-05-25) entire text | 1-15 |
| A | JP 2017-510437 A (JOHNSON MATTHEY PUBLIC LIMITED COMPANY) 13 April 2017 (2017-04-13) entire text | 1-15 |
| A | WO 2011/024847 A1 (TOSOH CORP.) 03 March 2011 (2011-03-03) entire text | 1-15 |
| P, A | JP 2023-103968 A (HIROSHIMA UNIVERSITY) 27 July 2023 (2023-07-27) entire text | 1-15 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 July 2024** | **30 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/017079**

| Patent document cited in search report | | | Publication date (day/month/year) | Patent family member(s) | | | Publication date (day/month/year) |
|---|---|---|---|---|---|---|---|
| JP | 2017-512630 | A | 25 May 2017 | US<br>entire text<br>WO<br>CN<br>KR | 2015/0246345<br>2015/128668<br>106029227<br>10-2016-0127108 | A1<br>A1<br>A<br>A | |
| JP | 2017-510437 | A | 13 April 2017 | US<br>entire text<br>WO<br>CN<br>KR | 2015/0246346<br>2015/128663<br>106029228<br>10-2016-0129030 | A1<br>A1<br>A<br>A | |
| WO | 2011/024847 | A1 | 03 March 2011 | US<br>entire text<br>EP<br>CN<br>KR | 2012/0141370<br>2471597<br>102548658<br>10-2012-0046722 | A1<br>A1<br>A<br>A | |
| JP | 2023-103968 | A | 27 July 2023 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017510437 A
- JP 2017512630 A
- JP 2007537858 A
- CN 114345402
- JP 2023079261 A

**Non-patent literature cited in the description**

- *Catalysis Communications*, 2017, vol. 89, 133-147
- *Journal of Catalysis*, 2009, vol. 261, 27-34